# EUROPEAN PATENT SPECIFICATION

(11) **EP 1 516 338 B1**
(45) Date of publication and mention of the grant of the patent: **29.08.2007**
(21) Application number: 03727846.2
(22) Date of filing: 27.05.2003
(51) Int. Cl.: G11B 23/50, G11B 7/00

(54) **DEVICE FOR SCANNING AND CLEANING AN INFORMATION CARRIER**
VORRICHTUNG ZUM ABTASTEN UND ZUM REINIGEN EINES INFORMATIONSTRÄGERS
DISPOSITIF PERMETTANT LE BALAYAGE ET LE NETTOYAGE D'UN SUPPORT D'INFORMATIONS

(30) Priority: 14.06.2002 EP 02077386
(43) Date of publication of application: 23.03.2005
(73) Proprietor: Koninklijke Philips Electronics N.V., 5621 BA Eindhoven (NL)
(72) Inventor: VAN DE OETELAAR, Ronald, J., A., NL-5656 AA Eindhoven (NL)
(74) Representative: van Liempd, Jan
(86) International application number: PCT/IB2003/002327
(87) International publication number: WO 2003/107345

(56) References cited:
- EP-A- 1 251 512
- WO-A-00/55855
- WO-A-98/53455
- US-A- 5 184 343
- US-A- 5 878 014
- US-A- 6 075 762
- US-A1- 2001 050 091
- US-B1- 6 394 105
- PATENT ABSTRACTS OF JAPAN vol. 2000, no. 13, 5 February 2001 (2001-02-05) -& JP 2000 288496 A (KUBOTA CORP), 17 October 2000 (2000-10-17)
- PATENT ABSTRACTS OF JAPAN vol. 2000, no. 16, 8 May 2001 (2001-05-08) -& JP 2001 023344 A (HITACHI LTD), 26 January 2001 (2001-01-26)
- PATENT ABSTRACTS OF JAPAN vol. 2000, no. 11, 3 January 2001 (2001-01-03) -& JP 2000 222858 A (SHARP CORP), 11 August 2000 (2000-08-11)
- PATENT ABSTRACTS OF JAPAN vol. 1998, no. 10, 31 August 1998 (1998-08-31) -& JP 10 144036 A (SONY CORP), 29 May 1998 (1998-05-29)
- PATENT ABSTRACTS OF JAPAN vol. 2000, no. 11, 3 January 2001 (2001-01-03) -& JP 2000 222852 A (SONY CORP), 11 August 2000 (2000-08-11)

## Description

The invention relates to a device for reading information represented by marks on an information carrier, the device comprising a scanning unit for generating a read signal from the marks, a radiation source and optical elements for generating a beam of radiation, focusing means for controlling at least one of the optical elements for creating a spot by focusing the beam, and cleaning means for cleaning a surface of the information carrier.

The invention further relates to an information carrier for use in the device, which information carrier is provided with a protective cartridge.

A device for scanning an information carrier is known from WO 98/53455. The information carrier carries information represented by marks, e.g. optically readable effects in a track on a disc shaped information carrier. The device comprises a drive unit for rotating the information carrier. For scanning the track a head constituted by optical elements is positioned opposite the track by a positioning unit, while the information carrier is rotated. The problem of contaminants on the surface of the information carrier is discussed. Contaminants can be removed by several methods, e.g. by hand or by inserting a special cleaning disk in the device for removing contaminants from within the device. A cleaning system is described having a cleaning pad or brush build in the device for cleaning the surface of the information carrier. Further the cleaning system includes a pad-cleaning component for removing the contaminants from the pad. A problem of the known system is that it is mechanically complex and not suitable for removing stubborn contaminants. Such contaminants are particularly disturbing for reading information from high density information carriers.

Document US 6,394,105 describes cleaning and inspecting a surface of a magnetic recording medium. The surface is subjected to the output of a laser source for applying a cleaning energy to the surface and removing contaminants on the surface. The laser source is also used for inspecting the surface being cleaned and to measure the effect of the cleaning.

Document JP2001-023344 describes an optical disk device having an optical pickup provided with an objective lens. Further a cleaning member for removing dust, stuck foreign matter or the like on the surface of the disk is provided near the objective lens. When cleaning, the cleaning member is brought into contact with the surface of the disk by an actuator to clean the surface of the disk.

Document WO00/55855 describes a magnetic disk cartridge, which provides reliable operation by protecting the magnetic disk media from dust. The cartridge is provided with ribs on the inner surface near the magnetic disk media. The ribs for at least one corner area are cut to form vents, and an adhesive trap for collecting dust is attached to the inner surface in the corner area.

Document JP2000-222858 describes a disk cartridge that prevents rubbish such as dust to adhere to a disk. In the disk cartridge, a magneto-optical disk is accommodated, and an electrostatic charged body is provided for attracting rubbish adhering to the magneto-optical disk by generating static electricity.

Document JP10-144036 describes removing dust in a cartridge by a dust collecting part for collecting dust scattered by rotating the discoid recording medium in the cartridge. The dust collecting part has a dust take-in hole and a dust discharge hole. When the disk is rotated, an airflow is generated in the cartridge, and dust is given centrifugal force and is moved to the outer side of the cartridge to enter the dust collecting part, and is then discharged from the dust discharge hole to the outside. Thus, air in the disk housing chamber can be cleaned.

Document JP2000-222852 describes collecting fine dust particles by a dust collecting sheet on the inner surface side of a cartridge body. The sheet collects dust particles contained in an air current generated due to the rotation of a disklike recording medium. The dust collecting sheet may be a resin sheet such as a polyimide sheet or the like or a nonwoven fabric such as a nylon fabric, a polyester fabric, a rayon fabric or the like which is coated with various adhesives.

It is an object of the invention to provide a scanning device having a cleaning system that is more efficient in removing stubborn contaminants.

For this purpose, a device is provided as defined in claim 1. An information carrier is provided as defined in claim 10. The measures have the effect that the surface of the information carrier is cleaned by locally heating the contaminated area and/or the contaminating particle itself. Due to the available power being focused on the small area constituting the spot said contamination is effectively removed from the surface. Particles removed from the surface can be prevented from again contaminating the surface by providing a material to which particles strongly adhere on the inner walls of the cartridge or disc drive.

The invention is based on the following recognition. First the inventors have seen that mechanical cleaning methods are not effective for removing smaller contaminating particles and stubborn surface contamination. Secondly the inventors have seen that industrial laser cleaning techniques, for example for semiconductor device fabrication, etc. known from "Laser cleaning of polymer surfaces; T. Fourier et al., Applied Physics A 72, 1 (2001), Materials Science & Processing", can be build into a scanning device like a home-use disc drive. Using a semiconductor radiation source and focusing a spot on the surface of the information carrier, and controlling the power of the radiation source provides just enough power to achieve the cleaning effect.

In an embodiment of the device the control means are arranged for controlling the power of the radiation source in pulses. The effect of using short pulses is that the radiation source can deliver a peak power that is substantially higher than the average power, because the power dissipation is based on average power. The peak power increases the cleaning efficiency.

A further embodiment of the device comprises detection means for detecting possible contamination of the surface, and the control means are arranged for cleaning parts of the surface where said possible contamination is detected. This has the advantage that only contaminated parts of the surface have to be cleaned, and this reduces the cleaning time.

These and other aspects of the invention will be apparent from and elucidated further with reference to the embodiments described by way of example in the following description and with reference to the accompanying drawings, in which
Fig. 1a shows an information carrier (top view),
Fig. 1b shows an information carrier (cross section),
Fig. 2 shows an information carrier in a cartridge,
Fig. 3 shows a radiation beam for reading a track,
Fig. 4 shows a radiation beam focused on the surface for cleaning,
Fig. 5 shows a reading device having laser control for cleaning, and
Fig. 6 shows a recording device having laser control for cleaning.
Corresponding elements in different Figures have identical reference numerals.

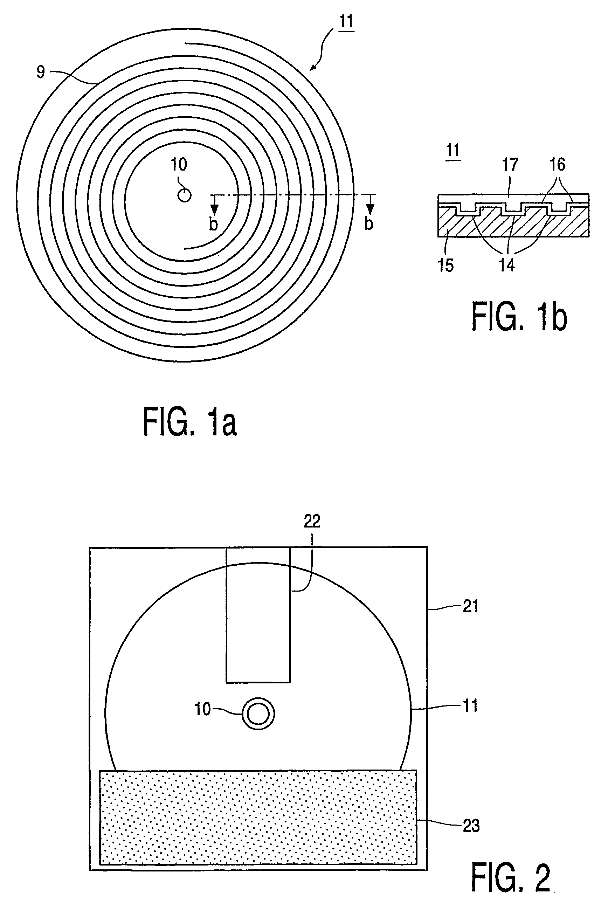

Fig. 1a shows a disc-shaped information carrier 11 having a track 9 and a central hole 10. The track 9, being the position of the series of (to be) recorded marks representing information, is arranged in accordance with a spiral pattern of turns constituting substantially parallel tracks on an information layer. The information carrier is optically readable, called an optical disc, and has an information layer of a read-only or recordable type. Examples of read-only discs are CD or DVD, and of a recordable disc are the CD-R and CD-RW, and writable versions of DVD, such as DVD+RW and DVD+R, and the high density writable optical disc using blue lasers, called Blue-ray Disc (BD). Further details about the DVD disc can be found in reference: ECMA-267: 120 mm DVD - Read-Only Disc - (1997*).* The information is represented on the information layer by recording optically detectable marks along the track, e.g. crystalline or amorphous marks in phase change material. The surface of the information carrier is suitable for cleaning by laser power as described below. It is noted that the laser cleaning of the surface can be used for discs with cartridge, but also for discs without cartridge. Reliability for both reading and writing can be improved.

Fig. 1b is a cross-section taken along the line b-b of the information carrier 11 of the recordable type, in which a transparent substrate 15 is provided with a recording layer 16 and a protective layer 17. In an embodiment of a multi-layer storage medium the protective layer 17 comprises one or more substrate layer(s) and/or recording layer(s), for example as in DVD where the recording layer is at a 0.6 mm substrate and a further substrate of 0.6 mm is bonded to the back side thereof. The track 9 on the recordable type of information carrier may be indicated by a pre-embossed track structure provided during manufacture of the blank information carrier. The track structure is constituted, for example, by a pregroove 14 which enables a read/write head to follow the track during scanning. The track structure comprises position information, e.g. addresses, for indication the location of units of information, usually called information blocks. The position information includes specific synchronizing marks for locating the start of such information blocks. The pregroove 14 may be implemented as an indentation or an elevation of the substrate 15 material, or as a material property deviating from its surroundings.

The information carrier 11 may, for example, be for carrying information representing digitally encoded video according to a standardized format like MPEG2.

Fig. 2 shows an information carrier in a cartridge. The information carrier 11 is enclosed by a cartridge 21. The cartridge is closable by a slider 22, which slider is moved away when the cartridge is inserted in a device for making the information carrier surface accessible for a read head. The centre hole 10 is visible for coupling to a driving unit in the device, but may alternatively be covered by the slider 22. The cartridge and slider constitute a substantially closed box around the information carrier 11 when not inserted in a device. The cartridge is provided with a contamination collecting unit 23 for collecting contamination which has been separated from the surface of the information carrier by laser cleaning as described below. In an embodiment the contamination collecting unit 23 is constituted by the inner walls of the cartridge being covered with a layer of material to which particles adhere, e.g. a material with a high surface energy being highly reactive such as (chemically treated) activated carbon.

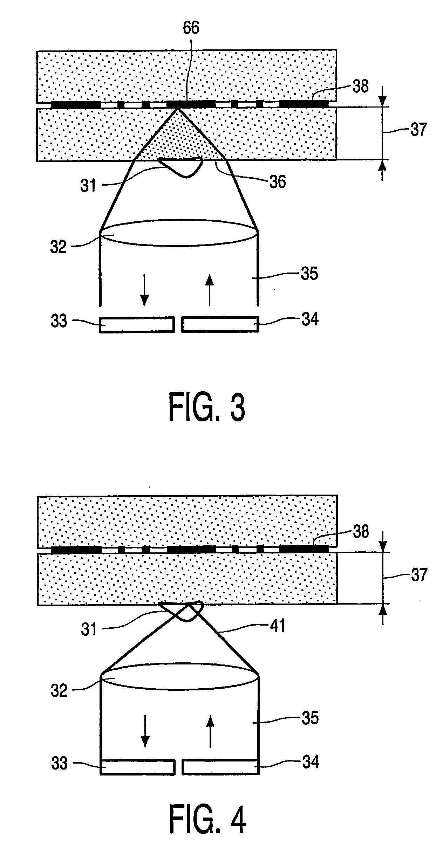

Fig. 3 shows a radiation beam for reading a track. A radiation source 34, e.g. a semiconductor laser, generates radiation which is guided via optical elements like objective lens 32 for constituting a radiation beam 35. The radiation beam enters the surface 36 of an information carrier, which is constituted by a substrate 37 of a predefined thickness as indicated by the arrow, e.g. 0.6 mm for DVD or 0.1 mm for a BD. Behind the substrate 37 there is located a recording layer having a track constituted by marks 38. A second substrate supports the structure for mechanical stability, or provides a second surface for reading and recording information. The radiation beam 35 is focused to form a spot 66 on the marks. Radiation is reflected to a detector 33 for generating a read signal. The surface 36 of the information carrier is contaminated by a dust particle 31. The optical beam 35 may be disturbed by the particle. The excellent reliability of the compact disc (CD) can be highly attributed to the presence of a 1.2 mm thick transparent substrate on top of the data layer. During reading and writing, the laser beam is focused through the thick substrate onto the data layer. The laser beam is out-of-focus on the surface of the disc, making the CD system rather insensitive to dust and fingerprints. The increase in data capacity of optical storage systems beyond CD (i.e. DVD and BD) has been realized using an objective with a higher numerical aperture and a laser with a shorter wavelength. However, in order to limit optical aberrations and to achieve sufficient optical tolerances, the thickness of the transparent substrate is reduced to 0.6 mm for DVD and 0.1 mm for BD. Hence DVD and BD, as well as future optical storage generations, are more vulnerable to dust and fingerprints, which may endanger their reliability. According to the invention laser cleaning as described below is built in the reading and/or recording device to increase the reliability. The disturbance, e.g. change in the intensity of the read signal, change in tracking signals or read errors, may be detected for determining the presence and location of the particle 31.

Fig. 4 shows a radiation beam focused on the surface for cleaning. The same optical elements are shown as in Fig. 3. The optical system is arranged for focusing the radiation beam 35 on the surface or near the surface, e.g. above the surface near the particle 31. By applying sufficient power to the radiation source 34 the dust particle is either loosened from the surface or evaporated. Instead of focussing the laser beam on the data layer, as is done during reading and writing, the laser is focussed on the top surface of the disc for cleaning. Short laser pulses (typically ~ 20 ns) of sufficiently high fluence (typically ~ 100 mJ/cm²) can remove contaminants, such as dust and fingerprints, due to rapid thermal expansion, ejecting the contaminants from the disc surface. The following calculation uses a practical laser of a maximum laser power of 250 mW (pulsed). A pulse width of 20 ns and a spot size of 1x5 µm² result in a fluence of 100 mJ/cm². Assuming a linear disc velocity of 10 m/s (which is about 3x the normal speed of DVD) and a pulse frequency of 10 MHz, a cleaning rate of 0.5 cm²/s is obtained. The laser power of 250 mW is not a strict requirement; the only requirement is that a fluence of approximately 100 mJ/cm² is obtained during a pulse of the order of tens of nanoseconds. The maximum laser power of current high-speed CD-R drives is approximately 200 mW (pulsed). The efficiency of the light path (usually around 40%) has to be taken into account. Therefore, using a laser power of 80 mW on the disc, a pulse width of 20 ns and a spot size of 1x1.6 µm², a fluence of 100 mJ/cm² can be obtained. Again assuming a linear disc velocity of 10 m/s and a pulse frequency of 10 MHz, a cleaning rate of 0.16 cm²/s is obtained. Dust particles which affect the read out or writing of a disc will generally cover an area much smaller than one square centimetre, and can thus be quickly removed.

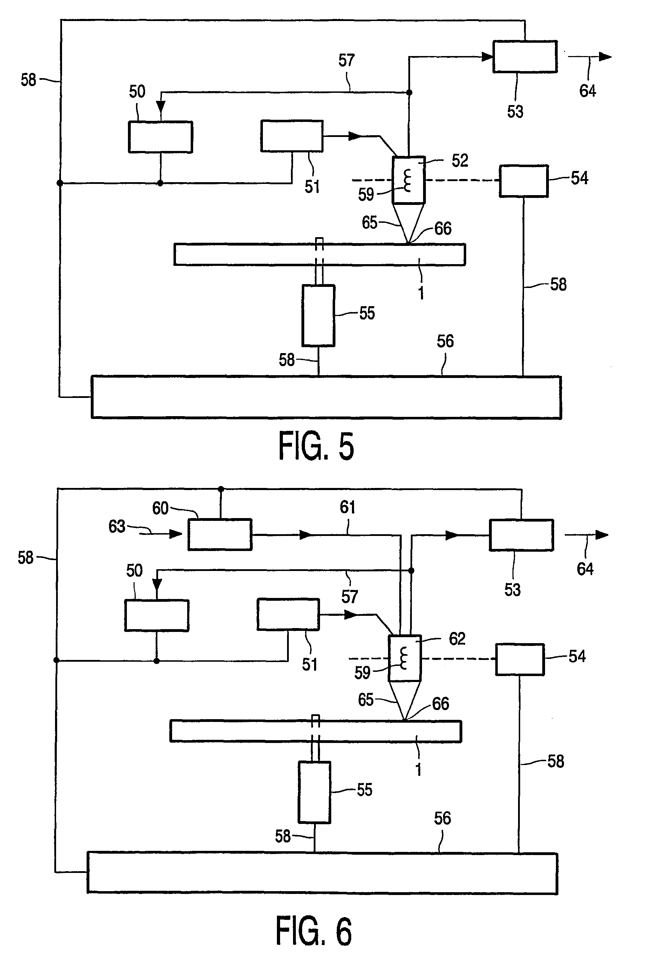

Figs. 5 and 6 show apparatuses according to the invention for scanning an information carrier 1, which have laser control for cleaning. The apparatus of Fig. 5 is arranged for reading the information carrier 1, which information carrier is identical to the information carriers shown in Fig. 1 or 2. The device is provided with read means comprising a read head 52 for scanning the track on the information carrier, a drive unit 55 for rotating the information carrier 1, a read signal processing unit 53 for example comprising a channel decoder and an error corrector and a system control unit 56. The read head comprises an optical system of a known type for generating a radiation spot 66 focused on a track of the recording layer of the information carrier via a radiation beam 65. The radiation beam 65 is generated by a radiation source, e.g. a laser diode. The read head 52 further comprises a focusing actuator 59 for focusing the radiation beam 65 on the recording layer and a tracking actuator (not shown) for fine positioning of the spot 66 in radial direction on the center of the track. The radiation reflected by the recording layer is detected by a detector of a usual type, e.g. a four-quadrant diode, for generating detector signals 57 including a read signal, a tracking error and a focusing error signal. During reading, the read signal is converted into output information, indicated by arrow 64, in the read signal processing unit 53. The apparatus has positioning means 54 for coarsely positioning the read head 52 in the radial direction on the track, the fine positioning being performed by the tracking actuator. The tracking actuator may comprise coils for radially moving an optical element or may be arranged for changing the angle of a reflecting element on a movable part of the read head or on a part on a fixed position in the case part of the optical system is mounted on a fixed position. The apparatus is provided with a cleaning control unit 51 for focusing the beam on the surface of the information carrier and for controlling the power of the laser for cleaning. For generating enough power for effective cleaning the power of the laser is applied in pulses. The peak power is delivered during said pulses, and the average power for the laser is kept sufficiently low by the periods between the pulses. The device is further provided with a control unit 56 for receiving commands from a controlling computer system or from a user and for controlling the apparatus via control lines 58, e.g. a system bus connected to the drive unit 55, the positioning means 54, the cleaning control unit 51 and the read signal processing unit 53. To this end, the control unit comprises control circuitry, for example a microprocessor, a program memory and control gates, for performing the procedures described below. The control unit 56 may also be implemented as a state machine in logic circuits. The cleaning control unit 51 may be arranged for controlling the cleaning function via the firmware of the drive and be integrated with control unit 56. As for the hardware, care should be taken that the focusing actuator 59 has a sufficient moving range perpendicular to the disc surface, in order to be able to focus both on the data layer and the disc surface. The optical elements in the light path of an optical disc drive are generally designed to minimize optical aberrations during focussing on the data layer through a substrate. If designed for a thin substrate, the optical aberrations while focussing on the disc surface will remain relatively small. Depending on the thickness of the substrate some of the optical elements may be adapted for focussing on the surface.

In an embodiment of the device the device has a contamination detection unit 50. In order to remove a contaminant particle from an optical disc surface by laser cleaning, the location of the contaminant is determined. The basic idea is that only contaminant particles which affect the optical reading and/or writing process should be removed. Contaminants that have no effect on the optical recording process will be left alone. In case of major contamination the user data rate may be temporarily affected during cleaning, which is preferable over unrecoverable data loss or write failure.

In a first embodiment of contamination detection unit 50 a contaminant is localized on a disc surface by detecting occurrence of unrecoverable data error(s). The approach assumes that an unrecoverable data error is caused by contaminants. When unrecoverable errors are detected and the tracking signal is still present, the exact location of the unrecoverable data error(s) is known. The area of the track involved is cleaned by focussing the laser on the surface. In an embodiment by alternatingly focussing on the disc surface and the data layer, the disc is laser cleaned by laser pulses focussed on the disc surface, while fully remaining on track due to the alternating focussing on the data layer. In an embodiment for a high density disc with a thin substrate contaminants are most harmful, and switching quickly between focussing on the data layer and focussing on the disc surface is possible because the distance between the data layer and the disc surface is small.

In a second embodiment of contamination detection unit 50 a contaminant is localized on a disc surface by detecting occurrence of loss of tracking signals. The actuator data at the moment of loss of tracking signal can be stored. In this way, the radial position of the contaminant is known. Starting from this radial position, the disc is laser cleaned by laser pulses focussed on the disc surface.

In an embodiment upon detection of a contaminant (either by means of detecting an unrecoverable data error, loss of tracking signal, or deviant reflectivity), the laser cleaning process is started from the respective radial position in outward direction. The laser cleaning process will last for a fixed time or fixed area. If only part of the contaminant has been removed (as detected again by an unrecoverable data error, loss of tracking signal, or deviant reflectivity), the laser cleaning process will again continue for a fixed time or fixed area.

In an embodiment of contamination detection unit 50 the disc surface is scanned for contaminants before reading or writing. This can e.g. be done by measuring the reflection of a laser beam focussed on the disc surface. Using an actuator, the laser is scanned over the entire disc surface. Areas where the reflectivity is different from the average value are likely contaminated. Upon detection of an area with a deviant reflectivity value, the disc is laser cleaned by laser pulses focussed on the disc surface. This approach will take more time than the embodiment above in which errors are detected, because also particles which do not (heavily) affect the optical reading and/or writing process will be removed. However the cleaning will advantageously be preventing problems during future writing or reading operations.

In an embodiment of the read device or the write device the disc is scanned for contamination upon insertion of the disc into the drive. Any contaminated part is cleaned immediately, or a background process is started for cleaning when no user read or write of data is required.

In an embodiment of the read device or the write device an oblong shaped laser spot for cleaning is obtained by putting a cylindrical lens in the light path. An oblong shaped spot is used to increase the cleaning rate, i.e. to reduce the cleaning time.

Fig. 6 shows a device for writing information on an information carrier having laser control for cleaning. The information carrier is of a type which is (re)writable in, for example a magneto-optical or optical manner (via phase change or dye) by means of a beam 65 of electromagnetic radiation. The device is usually also equipped for reading and comprises the same elements as the apparatus for reading described above with Fig. 5, except that it comprises write means which include a write/read head 62 and a write signal processing unit 60, which comprises for example a formatter, an error encoder and a channel encoder. The write/read head 62 has the same function as the read head 52 together with a write function and is coupled to the write signal processing unit 60. The information presented to the input of the write signal processing unit 60 (indicated by the arrow 63) is distributed over logical and physical sectors according to formatting and encoding rules and converted into a write signal 61 for the write/read head 62. The system control unit 56 is arranged for controlling the cleaning function as described above for the reading apparatus. During the writing operation, marks representing the information are formed on the information carrier. Writing and reading of information for recording on optical discs and usable formatting, error correcting and channel coding rules, are well-known in the art, e.g. from the CD system. The apparatus is provided with a cleaning control unit 51 for controlling the power of the laser for cleaning, and in an embodiment provided with a contamination detection unit 50, having the same function as described above for the read device and its embodiments.

In an embodiment the read device or the write device is provided with a data buffer (not shown) coupled to the read signal processing unit 53 or the write signal processing unit 60. The size of the data buffer is determined such that a few seconds worth of data can be stored. Several square centimeters of disc surface can be cleaned during reading and/or writing without affecting the user data rate using the practical laser calculation given with Fig. 4.

The laser cleaning process will remove contaminant particles from the disc surface. Once removed, the motion of the particles will be affected by the air flow in the optical drive. In an embodiment the inside walls of the optical drive can be (partly) covered by a material to which the particles strongly adhere, in order to prevent the same particles from contaminating the disc surface again, e.g. a material with a high surface energy which is highly reactive such as (chemically treated) activated carbon.

Further in a combination drive, i.e. a device having at least two laser sources for two different types of optical discs like CD-R and DVD, the laser source used for cleaning may be a different laser than the laser used for reading the information carrier. For example a powerful laser build in the device for writing CD-R may advantageously be used for cleaning a DVD disc. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware.

## Claims

1. Device for reading information represented by marks (38) on an information carrier (11), the device comprising:
a scanning unit (52;62) for generating a read signal from the marks,
a radiation source (34) and optical elements for generating a beam of radiation,
the scanning unit (52;62) including the radiation source (34) and at least one of the optical elements (32) for scanning a track on the information carrier for generating the read signal, focusing means (59) for controlling at least one of the optical elements for creating a spot by focusing the beam, and
cleaning means for cleaning a surface of the information carrier,
**characterized in that**
the cleaning means comprise control means (51) for performing said cleaning by controlling the focusing means (59) to focus the spot substantially on the surface of the information carrier and for controlling the power of the radiation source.

2. Device as claimed in claim 1, wherein the control means (51) are arranged for controlling the power of the radiation source in pulses.

3. Device as claimed in claim 1, wherein the scanning unit (52;62) is arranged for scanning the track on the information carrier for recording the marks.

4. Device as claimed in claim 1, wherein the device comprises detection means (50) for detecting possible contamination of the surface, and wherein the control means (51) are arranged for cleaning parts of the surface where said possible contamination is detected.

5. Device as claimed in claim 4, wherein the detection means (50) are arranged for detecting contamination based on at least one of: reflection of the surface; an error occurring in the read signal; an error in tracking signals generated by the scanning unit

6. Device as claimed in claim 4, wherein the control means (50) are arranged for cleaning in at least one of the following ways: in radially outward direction from a detected error; repeatedly a part of the surface where said possible contamination is detected; alternatingly switching the focusing means to focus on the surface and on a track on an information layer of the information carrier for locating said parts based on position information included in the track.

7. Device as claimed in claim 1, wherein the control means (50) are arranged for cleaning on at least one of the following moments: by interrupting reading or recording of marks when an error is detected; in a background process at moments when no reading or recording is required; after inserting an information carrier in the device.

8. Device as claimed in claim 1, wherein the optical elements include an element for creating the spot having an oblong shape perpendicular to a direction of movement of the spot, in particular the element being a cylindrical lens.

9. Device as claimed in claim 1, wherein the device is provided with contamination collecting means for adhering particles removed from the surface of the information carrier by said cleaning, in particular at least part of the inner walls of the device enclosing the information carrier being covered by activated carbon.

10. A system comprising the device of claim 1, the system further comprising the information carrier, as described in claim 1, present in a protective cartridge (21) provided with contamination collecting means (23) at a distance from the surface of the information carrier for adhering particles removed from the surface of the information carrier by said cleaning, **characterized in that** the contamination collecting means (23) comprise at least part of the inner walls of the cartridge being covered by activated carbon.

## Patentansprüche

1. Einrichtung zum Lesen von Informationen, die durch Marken (38) auf einem Informationsträger (11) repräsentiert werden, wobei die Einrichtung Folgendes umfasst: eine Abtasteinheit (52, 62) zum Erzeugen eines Lesesignals aus den Marken,
eine Strahlungsquelle (34) und optische Elemente zum Erzeugen eines Strahlenbündels, wobei die Abtasteinheit (52, 62) die Strahlungsquelle (34) und mindestens eines der optischen Elemente (32) zum Abtasten einer Spur auf dem Informationsträger enthält, um das Lesesignal zu erzeugen,
Fokussiermittel (59) zum Steuern von mindestens einem der optischen Elemente, um durch Fokussieren des Strahlenbündels einen Punkt zu erzeugen, und
Reinigungsmittel zum Reinigen einer Oberfläche des Informationsträgers,
**dadurch gekennzeichnet, dass**
die Reinigungsmittel Steuermittel (51) zum Durchführen der Reinigung durch Steuern der Fokussiermittel (59), um den Punkt im Wesentlichen auf die Oberfläche des Informationsträgers zu fokussieren, und zum Steuern der Leistung der Strahlungsquelle umfassen.

2. Einrichtung nach Anspruch 1, bei der die Steuermittel (51) eingerichtet sind, um die Leistung der Strahlungsquelle in Impulsen zu steuern.

3. Einrichtung nach Anspruch 1, bei der die Abtasteinheit (52, 62) eingerichtet ist, um die Spur auf dem Informationsträger zum Aufzeichnen der Marken abzutasten.

4. Einrichtung nach Anspruch 1, wobei die Einrichtung Erkennungsmittel (50) zum Erkennen möglicher Verschmutzungen der Oberfläche umfasst und bei der die Steuermittel (51) eingerichtet sind, um Teile der Oberfläche zu reinigen, bei denen eine mögliche Verschmutzung erkannt wurde.

5. Einrichtung nach Anspruch 4, bei der die Erkennungsmittel (50) eingerichtet sind, um Verschmutzungen auf der Grundlage von zumindest einem der folgenden Punkte zu erkennen: Reflexion der Oberfläche; ein im Lesesignal auftretender Fehler; ein Fehler bei den durch die Abtasteinheit erzeugten Spurhaltungssignalen.

6. Einrichtung nach Anspruch 4, bei der die Steuermittel (51) zum Reinigen in mindestens einer der folgenden Arten eingerichtet sind: von einem erkannten Fehler ausgehend radial nach außen; wiederholtes Reinigen eines Teils der Oberfläche, bei dem eine mögliche Verschmutzung erkannt wurde; abwechselndes Umschalten der Fokussiermittel zum Fokussieren auf die Oberfläche und auf eine Spur auf einer Informationsschicht des Informationsträgers, um diese Teile auf der Grundlage der in der Spur enthaltenen Positionsinformationen zu lokalisieren.

7. Einrichtung nach Anspruch 1, bei der die Steuermittel (51) zum Reinigen in mindestens einem der folgenden Momente eingerichtet sind: durch Unterbrechen des Lesens oder Schreibens von Marken bei Erkennung eines Fehlers; in einem Hintergrundprozess, wenn kein Lesen oder Schreiben gefordert wird; nach dem Einlegen eines Informationsträgers in die Einrichtung.

8. Einrichtung nach Anspruch 1, bei der die optischen Elemente ein Element zum Erzeugen des Punkts mit einer zur Bewegungsrichtung des Punkts senkrechten länglichen Form umfassen, wobei das Element insbesondere eine zylindrische Linse ist.

9. Einrichtung nach Anspruch 1, wobei die Einrichtung mit Staubauffangmitteln versehen ist, um Partikel zu binden, die mittels der Reinigung von der Oberfläche entfernt wurden, wobei insbesondere zumindest ein Teil der Innenwände der Einrichtung, die den Informationsträger umschließen, mit Aktivkohle bedeckt ist.

10. System, das die Einrichtung nach Anspruch 1 umfasst, wobei das System des Weiteren den Informationsträger umfasst, wie in Anspruch 1 beschrieben, der in einer Schutzkassette (21) vorhanden ist, die in einem Abstand von der Oberfläche des Informationsträgers mit Schmutzauffangmitteln (23) zum Binden von Partikeln versehen ist, die mittels der Reinigung von der Oberfläche des Informationsträgers entfernt wurden, **dadurch gekennzeichnet, dass** die Schmutzauffangmittel (23) mindestens einen Teil der Innenwände der Kassette umfassen, der mit Aktivkohle bedeckt ist.

## Revendications

1. Dispositif de lecture d'informations représentées par des marques (38) sur un support d'informations (11), le dispositif comprenant :
une unité de balayage (52; 62) pour générer un signal de lecture à partir des marques,
une source de rayonnement (34) et des éléments optiques pour générer un faisceau de rayonnement,
l'unité de balayage (52; 62) incluant la source de rayonnement (34) et au moins un des éléments optiques (32) pour balayer une piste sur le support d'informations pour générer le signal de lecture, des moyens de focalisation (52) pour commander au moins un des éléments optiques pour créer un spot en focalisant le faisceau, et
des moyens de nettoyage pour nettoyer une surface du support d'informations,
**caractérisé en ce que**
les moyens de nettoyage comprennent des moyens de commande (51) pour réaliser ledit nettoyage en commandant les moyens de focalisation (59) pour focaliser le spot substantiellement sur la surface du support d'informations et pour commander la puissance de la source de rayonnement.

2. Dispositif selon la revendication 1, dans lequel les moyens de commande (51) sont aménagés pour commander la puissance de la source de rayonnement au moyen d'impulsions.

3. Dispositif selon la revendication 1, dans lequel l'unité de balayage (52; 62) est aménagée pour balayer la piste sur le support d'informations pour enregistrer les marques.

4. Dispositif selon la revendication 1, dans lequel le dispositif comprend des moyens de détection (50) pour détecter une souillure possible de la surface, et dans lequel les moyens de commandes (51) sont aménagés pour nettoyer des parties de la surface où ladite souillure possible est détectée.

5. Dispositif selon la revendication 4, dans lequel les moyens de détection (50) sont aménagés pour détecter une souillure sur la base d'au moins un élément parmi les suivants : réflectivité de la surface; erreur arrivant dans le signal de lecture, erreur dans les signaux de suivi générés par l'unité de balayage.

6. Dispositif selon la revendication 4, dans lequel les moyens de commande (50) sont aménagés pour nettoyer selon au moins une des façons suivantes : radialement vers l'extérieur à partir d'une erreur détectée; de façon répétée une partie de la surface où ladite souillure possible est détectée; en commutant alternativement les moyens de focalisation pour focaliser sur la surface et sur une piste d'une couche d'informations du support d'informations pour localiser lesdites parties sur la base d'informations de position inclues dans la piste.

7. Dispositif selon la revendication 1, dans lequel les moyens de commande (50) sont aménagés pour nettoyer à au moins un des moments suivants : en interrompant une lecture ou un enregistrement de marques quand une erreur est détectée; dans un processus d'arrière-plan lorsque ni une lecture ni un enregistrement n'est requis; après l'insertion d'un support d'informations dans le dispositif.

8. Dispositif selon la revendication 1, dans lequel les éléments optiques incluent un élément permettant de créer le spot possédant une forme oblongue perpendiculaire à une direction de mouvement du spot, l'élément étant en particulier une lentille cylindrique.

9. Dispositif selon la revendication 1, dans lequel le dispositif est pourvu de moyens de collecte de souillures pour faire adhérer des particules enlevées de la surface du support d'informations par ledit nettoyage, en particulier au moins une partie des parois intérieures du dispositif entourant le support d'informations étant recouverte par du charbon actif.

10. Système comprenant le dispositif de la revendication 1, le système comprenant de plus le support d'informations, comme décrit à la revendication 1, présent dans une cartouche protectrice (21) possédant des moyens de collecte de souillures (23) à une certaine distance de la surface du support d'informations pour faire adhérer des particules enlevées de la surface du support d'informations par ledit nettoyage, **caractérisé en ce que** les moyens de collecte de souillures (23) comprennent au moins une partie des parois intérieures de la cartouche recouverte de carbone activé.
